Europäisches Patentamt

European Patent Office

Office européen des brevets

(11) Numéro de publication: **0 128 099**
**B1**

(12) **FASCICULE DE BREVET EUROPEEN**

(45) Date de publication du fascicule du brevet:
**14.09.88**

(21) Numéro de dépôt: **84401130.4**

(22) Date de dépôt: **04.06.84**

(51) Int. Cl.⁴: **H 02 K 19/10, H 02 K 5/173**

(54) Machine tournante dynamo-électrique à réluctance variable.

(30) Priorité: **02.06.83 FR 8309166**

(43) Date de publication de la demande:
**12.12.84 Bulletin 84/50**

(45) Mention de la délivrance du brevet:
**14.09.88 Bulletin 88/37**

(84) Etats contractants désignés:
**CH DE FR GB IT LI**

(56) Documents cités:
**FR - A - 1 580 150**
**FR - A - 2 044 282**
**FR - A - 2 156 225**
**US - A - 1 504 608**
**US - A - 2 797 346**
**US - A - 3 136 905**
**US - A - 3 484 633**
**US - A - 3 992 641**
**US - A - 4 355 249**

(73) Titulaire: **ELECTRICITE DE FRANCE Service National, 2, rue Louis Murat, F-75008 Paris (FR)**
Titulaire: **CENTRE NATIONAL DE LA RECHERCHE SCIENTIFIQUE (CNRS), 15, Quai Anatole France, F-75007 Paris (FR)**

(72) Inventeur: **Rioux, Christian, 10, rue Emile Morel, F-92330 Sceaux (FR)**
Inventeur: **Lucidarme, Jean, 88, rue Pasteur, F-91700 Sainte Genevieve des Bois (FR)**.
Inventeur: **Guillet, Roger, Résidence Agate 19, rue Bobillot, F-75013 Paris (FR)**

(74) Mandataire: **Fort, Jacques et ai, CABINET PLASSERAUD 84, rue d'Amsterdam, F-75009 Paris (FR)**

## Description

L'invention concerne les machines tournantes dynamo-électriques à réluctance variable du type comprenant un rotor à disques et un stator comportant des disques alternés avec ceux du rotor et portés par une carcasse magnétique de fermeture d'un circuit magnétique, des moyens portés par le stator créant un champ alternatif dirigé axialement à travers les disques qui comportent les plots magnétiques régulièrement répartis angulairement autour de l'axe. Elle trouve une application importante, bien que non exclusive, dans le domaine des moteurs fonctionnant à une fréquence élevée, supérieure à la fréquence normale du réseau.

Dans ces machines, souvent appelées «polydiscoïdes», le flux magnétique est maximal lorsque tous les plots sont alignés axialement. Lorsqu'au contraire les plots du rotor sont en quinconce avec les plots du stator, le flux est minimal.

Les machines tournantes à réluctance variable ont des caractéristiques intéressantes, surtout aux fréquences élevées que permettent maintenant d'atteindre à un prix modéré les alimentations incorporant une électronique de puissance à composantes solides. Le rendement est élevé lorsque le nombre de plots magnétiques par disque est grand. Le couple volumique est également élevé lorsque le nombre de disques est important, les jeux entre disques sont faibles et les circuits de retour de flux ont une masse réduite.

Une machine simple à réluctance variable a l'inconvénient d'un couple instantané très variable suivant la position relative des disques rotoriques et statoriques. Ce couple peut même s'inverser pour certaines positions. Pour écarter cet inconvénient, on a déjà proposé (brevet U.S. 3 992 641) de monter, sur un même arbre de machine, n groupes de disques rotoriques, pour constituer une machine conforme au préambule de la revendication 1.

Si en théorie cette disposition est séduisante, sa réalisation pratique fait apparaître des problèmes dont l'ampleur peut conduire à rejeter cette approche.

Un premier problème est lié à l'instabilité axiale inhérente à ce type de machine. Lorsqu'un disque est plongé dans le champ magnétique créé par les moyens portés par le stator, il est soumis non seulement aux forces azimutales utiles, mais aussi à des forces axiales (normales aux entrefers) dont la valeur varie avec la position et/ou les flexions du disque. Or, les tolérances inévitables de fabrication et de montage des disques sur le rotor d'un bout à l'autre de l'empilement se cumulent et font qu'il est impossible de garantir un centrage satisfaisant des disques rotoriques entre les disques statoriques dans une machine à plusieurs couples de disques successifs. Et même si ces tolérances étaient respectées lors du montage, les dilatations différentielles intervenant lors de la montée à la température de fonctionnement se traduiraient par un décentrage, source de forces axiales et d'instabilités. La saillie radiale des disques dans les machines envisagées jusqu'ici est telle que ces disques présentent fréquemment un voilage qui aggrave le problème. En conséquence, il est nécessaire de prévoir des jeux axiaux inter-disques importants. Or, la puissance par unité de masse qu'il est possible d'obtenir est une fonction fortement décroissante de l'importance des jeux.

Par ailleurs, on se heurte au problème de l'usure rapide par matage des moyens qui solidarisent en rotation les disques, généralement en matériau isolant, de l'arbre, généralement en acier, par suite de la non uniformité du couple transmis.

On pourrait penser que le problème peut être résolu en scindant la machine en plusieurs unités complètes, dont les arbres sont accouplés. Mais cette constitution conduit à une machine d'encombrement axial excessif et, au surplus, laisse subsister le problème de centrage au sein d'une même unité. Elle a conduit, dans le moteur pas à pas suivant le document FR-A-1 580 150, à limiter à un le nombre de disques rotoriques d'une même unité, alors que la puissance par unité de masse qu'il est possible d'obtenir augmente avec le nombre de disques par groupe.

Pour l'homme de métier il n'est guère possible d'aller au-delà de trois disques avec cette constitution: c'est ce nombre de trois disques qui est retenu dans un mode de réalisation de moteur pas à pas décrit dans le document US-A-2 797 346, où les disques statoriques sont remplacés par de simples dents.

L'invention vise à fournir une machine répondant mieux de celles antérieurement connues aux exigences de la pratique, notamment en ce qu'elle permet de surmonter les problèmes ci-dessus.

Dans ce but, l'invention propose une machine conforme au préambule de la revendication 1, caractérisée en ce que chaque groupe de plusieurs disques rotoriques est individuellement centré axialement par rapport au groupe de disques statoriques correspondant par des paliers de butée et des cales de réglage et en ce que le rapport entre le diamètre interne des disques rotoriques et leur diamètre externe est supérieur à 0,5.

Une valeur élevée, typiquement entre 0,7 et 0,8, du rapport est avantageuse. On réduit ainsi, à surface active égale, la saillie radiale et donc le risque de voilage. On réduit en même temps les contraintes d'encastrement, ce qui évite l'usure prématurée par matage. Enfin, on diminue les masses des circuits de retour, ce qui est un élément supplémentaire favorable à une puissance massique élevée. Les schémas de moteurs donnés dans certains documents, par exemple FR-A-2 044 282, montrent de tels rapports. Mais ce dernier document décrit un moteur dont le disque unique porte des bobinages et dans lequel le problème que résout le choix d'un rapport élevé dans le cas d'un moteur à plusieurs groupes de plusieurs disques rotoriques ne se pose pas dans les mêmes termes.

Cette disposition, qui revient à fractionner la machine en modules, conduit habituellement à concevoir l'arbre rotatif en tronçons associés chacun à un module. Etant donné la valeur élevée du rapport entre diamètre interne et diamètre externe des disques rotoriques, on sera amené à utiliser des tronçons d'arbres creux dès que la machine est de taille suffisante. De façon à donner une résistance structurelle élevée à l'arbre, à résoudre les problèmes d'accouplement entre tronçons et à réduire les phénomènes de torsion, on prévoira avantageusement un arbre interne (qui peut être l'arbre d'un des modules) sur lequel seront placés les arbres creux des autres modules. On peut facilement obtenir une portée importante de chaque arbre creux par rapport à son diamètre, ce qui donne une grande rigidité à l'arbre composite finalement obtenu.

Les deux dispositions prévues par l'invention coopèrent étroitement à un résultat commun, c'est-à-dire un nombre élevé de disques ($\geqslant$3 dans chaque module) et des jeux faibles. Le fractionnement réduit le nombre de jeux qui s'accumulent à ceux d'un module et ces jeux peuvent être réduits car les paliers de grand diamètre assurent un bon positionnement et la faible saillie réduit le voilage qui exigerait des jeux accrus.

L'invention sera mieux comprise à la lecture de la description qui suit de modes particuliers d'exécution de l'invention, donnés à titre d'exemples non limitatifs, et de la comparaison qui en est faite avec l'art antérieur. La description se réfère aux dessins qui l'accompagnent, dans lesquels:

— la Figure 1 est une vue schématique, en coupe suivant un plan passant par l'axe, d'une machine tournante suivant l'art antérieur, à un seul groupe de disques rotoriques;

— les Figures 2 et 3, similaires à la Figure 1, sont des schémas montrant deux constitutions possibles de machines à plusieurs modules;

— les Figures 4A et 4B sont des schémas de principe de deux variantes d'un module de machine suivant l'invention, utilisant un circuit magnétique dont la constitution est similaire à celle montrée en Figure 2;

— les Figures 5A et 5B montrent, en coupe suivant un plan passant par l'axe, la constitution d'un des modules latéraux de deux machines respectivement construites conformément aux principes montrés sur les Figures 4A et 4B;

— les Figures 6 et 7 sont des vues de détail montrant un fragment de disque rotorique utilisable dans le module de la Figure 5A, respectivement en coupe suivant un plan passant par l'axe et en vue de face;

— les Figures 8A et 8B, similaires aux Figures 4A et 4B, montrent une variante de réalisation dont le circuit magnétique correspond au schéma de principe de la Figure 3.

Avant de décrire l'invention, on rappellera brièvement la constitution et les caractéristiques d'une machine tournante à réluctance variable de type classique.

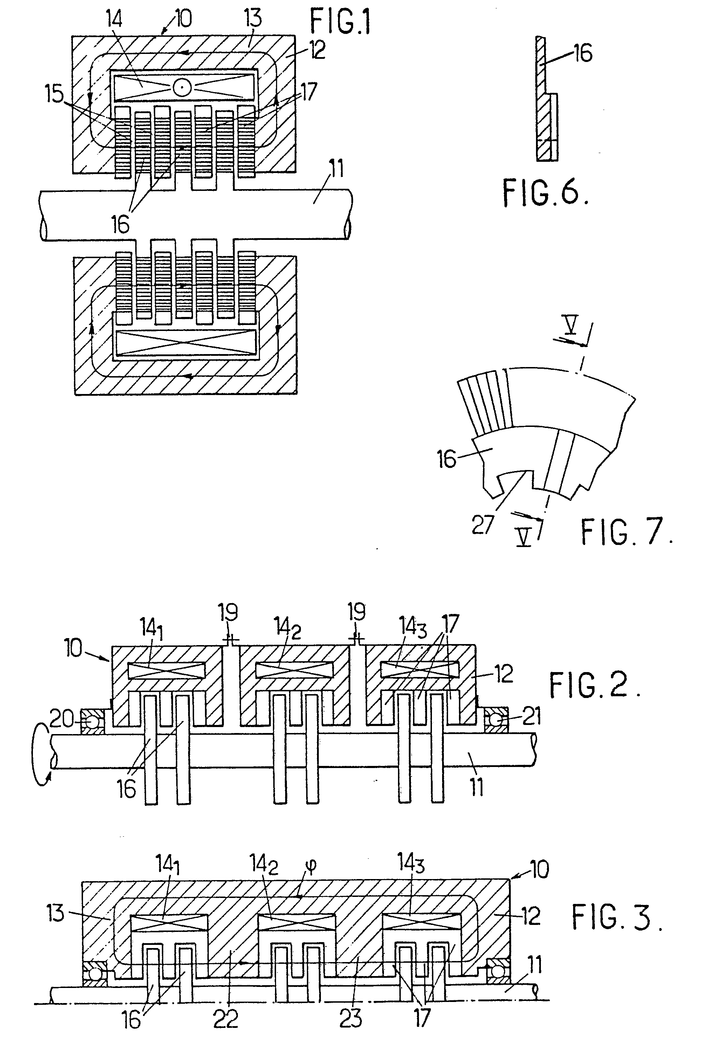

La machine 10 montrée en Figure 1 comporte un rotor 11 et un stator 12. Le stator 12 comprend une carcasse 13 formant circuit magnétique, portant des moyens 14 de création d'un champ magnétique et une série de disques statoriques 17 traversés par le flux magnétique. Le rotor 11 comporte une série de disques 16 alternés avec les disques 17. Entre les disques statoriques et rotoriques subsistent des entrefers 15 dans lesquels le champ magnétique est parallèle à l'axe. Les disques 17 et 16 ont une constitution similaire. Ils comportent un même nombre de plots magnétiques fixés dans un plateau isolant. Le nombre et la forme des plots régulièrement répartis angulairement autour de l'axe sont les mêmes pour les disques statoriques 17 et rotoriques 16. Les plots magnétiques des disques statoriques 17 sont alignés. De même, les plots des disques rotoriques sont alignés. Lorsque tous les plots ont la même position angulaire, le flux magnétique est maximal. Lorsque les plots sont en quinconce, le flux est minimal.

Chacun des disques 17 et 16 plongés dans le champ créé par les moyens 14, constitués par un bobinage, est soumis à deux types de forces. Les forces azimutales créent le couple utile (couple d'entraînement dans le cas d'un moteur). Les forces axiales, c'est-à-dire normales à l'entrefer, sont nuisibles en ce qu'elles sont source d'instabilité axiale.

L'un des inconvénients d'une machine du genre montré en Figure 1 est que le couple rotorique varie en fonction de la position angulaire du rotor. Pour écarter ce défaut, on a envisagé de fractionner la machine en plusieurs modules alimentés par des phases différentes d'une même source. Les Figures 2 et 3 correspondent au cas où la machine 10 est triphasée. Le rotor 11 porte alors trois jeux ou groupes de disques 16. Chacun des jeux de disques est associé à un enroulement 14/1, 14/2 ou 14/3 constituant les moyens de création du flux magnétique. Chacun des enroulements 14/1, 14/2 et 14/3 est alimenté par l'une des phases d'une source d'alimentation triphasée. Les trois jeux de disques sont portés par le même arbre, qui peut être d'une seule pièce pour plus de rigidité. A chaque jeu de disques rotoriques 16 est associé un jeu correspondant de disques statoriques alternés avec eux, les deux disques terminaux étant en règle générale des disques statoriques.

On voit qu'on constitue ainsi une machine à trois modules. Dans chaque module, les plots des disques sont décalés des plots des autres modules d'un intervalle angulaire égal au tiers de l'espacement angulaire des plots.

Dans le mode de réalisation montré en Figure 2, les stators constitutifs des trois modules sont distincts et fixés rigidement l'un à l'autre par des liaisons 19. L'arbre est centré par rapport au stator par deux paliers 20 et 21. Dans le cas montré en Figure 3, on met en commun certaines parties des circuits magnétiques de retour des flux sur deux modules adjacents (parties 22 et 23).

Pour que les performances d'une telle machine soient satisfaisantes, il est souhaitable de fonctionner en régime à saturation marquée et, pour cela, les moyens 14/1, 14/2, 14/3 sont avantageusement prévus de façon à permettre d'y faire circuler à la fois un courant continu et un courant alternatif.

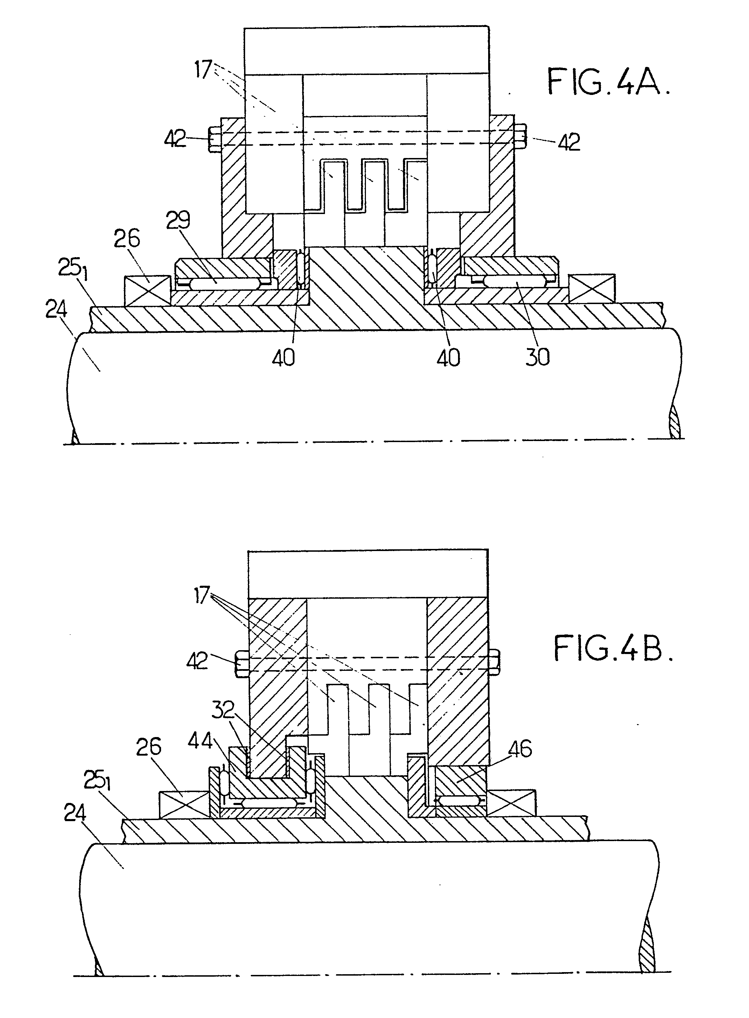

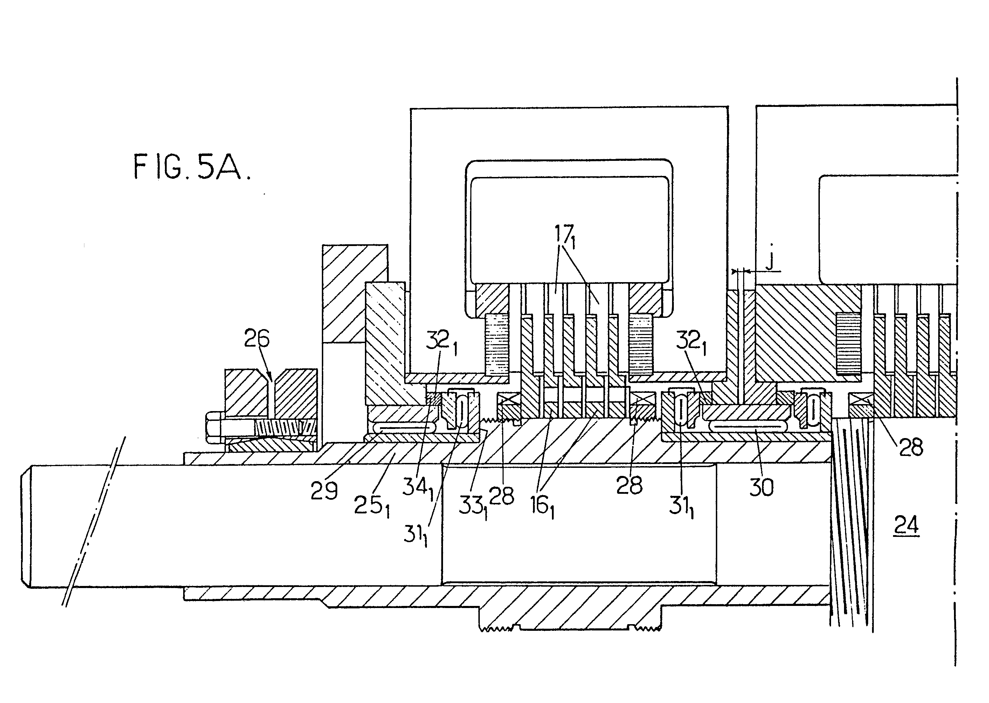

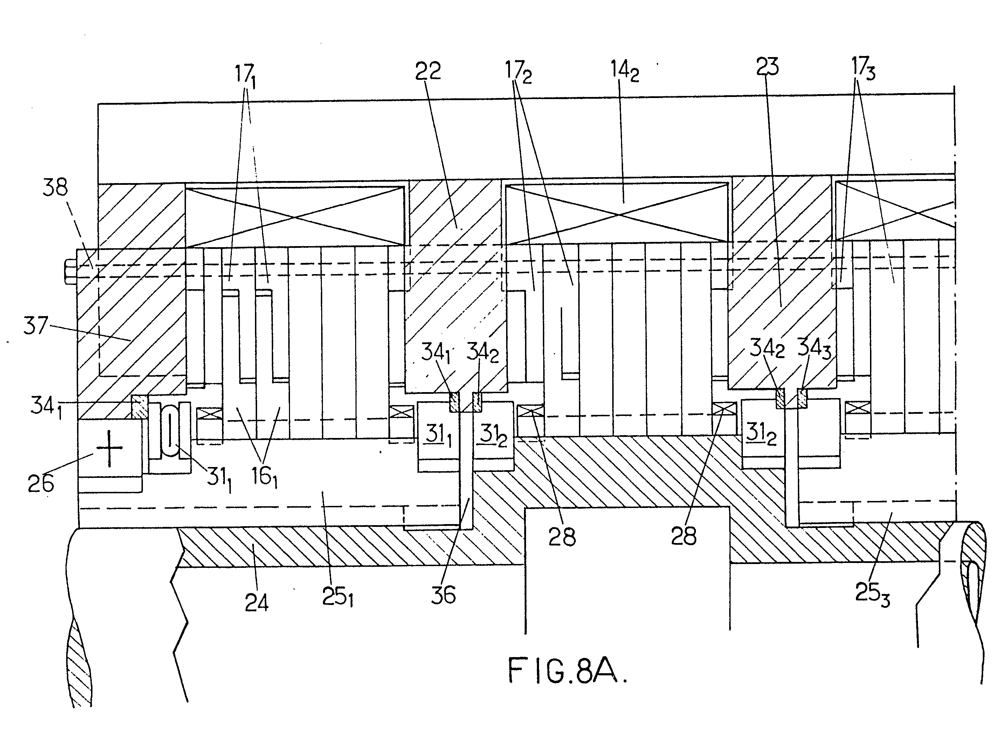

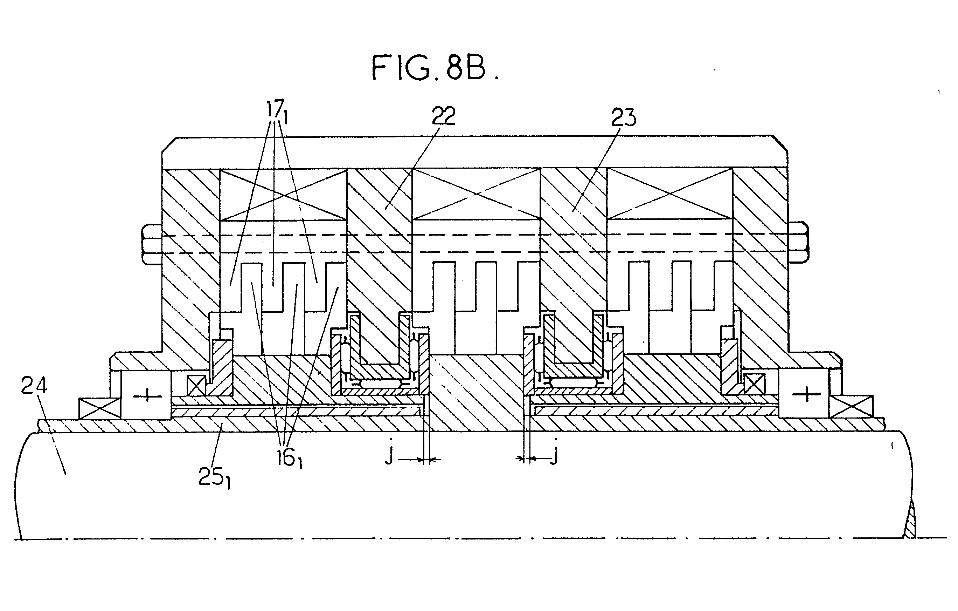

On décrira maintenant, d'une part, des modes de réalisation à stator fractionné (figures 4A, 4B, 5A et 5B), d'autre part, des modes de réalisation dont les modules ont des stators à circuit magnétique commun (Figures 8A et 8B).

Dans le premier cas, l'indépendance mécanique des modules, tant du point de vue définition des jeux d'assemblage qu'influence des dilatations thermiques, est assurée en laissant un léger jeu j entre les stators.

Les rotors seront généralement portés par un arbre unique composite comportant un arbre interne 24 sur lequel est monté le groupe de disques rotoriques appartenant au module central et deux tronçons d'arbre externes 25/1 et 25/3. La liaison entre chacun des tronçons 25/1 et 25/3 et l'arbre interne 24 est réalisée par un système de serrage à cône 26, par exemple du type couramment dénommé «grip disk». Le circuit magnétique associé à chaque groupe de disques statoriques constitue un ensemble individuellement centré par rapport aux disques rotoriques correspondants, les trois ensembles étant connectés par des liaisons souples. Les tronçons 25/1 et 25/3 pourraient être solidarisés de l'arbre central 24 par d'autres moyens, par exemple à l'aide de cannelures, réalisées par brochage pour avoir une précision garantissant un bon contact et une transmission satisfaisante du couple. Grâce aux liaisons souples entre les ensembles statoriques, on permet la dilatation thermique différentielle se traduisant par des modifications de l'intervalle entre ces ensembles statoriques. Le couple statorique peut être repris aisément par une carcasse extérieure n'empêchant pas de légers déplacements axiaux.

Deux solutions sont dans tous les cas possibles pour centrer axialement le stator et le rotor d'un module l'un par rapport à l'autre.

Une première solution (Figure 4A) consiste à assurer le centrage axial à l'aide d'un ensemble symétrique de deux paliers de butée simples 40, placés chacun à une extrémité du module. Les charges maximales appliquées aux roulements sont alors limitées par l'élasticité contrôlée du stator de chaque module (par exemple à l'aide de tiges précontraintes 42) lorsque les stators sont indépendants.

Une autre solution (Figure 4B) consiste à maintenir axialement chaque module à une extrémité seulement par un palier de butée double 44 enserrant un flasque du stator. L'autre extrémité est supportée par un palier simple 46, donc est libre axialement.

Dans les deux cas, des cales d'épaisseur 32 (non montrées sur la Figure 4A) permettent d'effectuer un centrage axial précis.

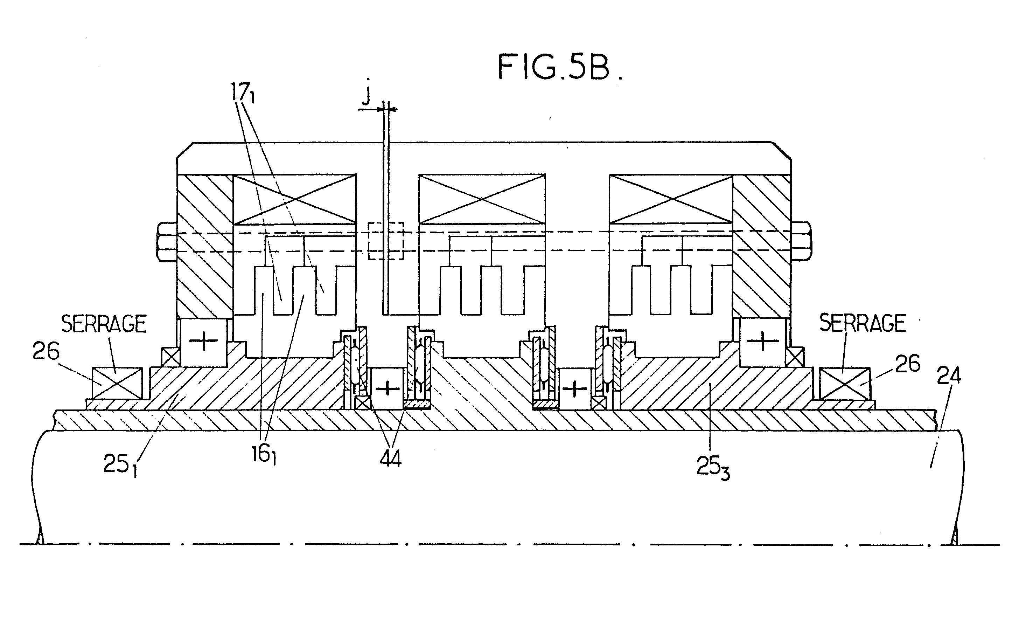

Les Figures 5A et 5B montrent deux modes de réalisation des moyens de réglage axial de la position relative des disques rotoriques 16 par rapport aux disques statoriques 17 correspondant respectivement aux schémas des Figures 4A et 4B. L'empilement des disques rotoriques 16/1 par exemple (chaque disque pouvant être du genre montré en Figures 6 et 7) est solidaire de l'arbre creux 25/1 dans une position axiale bien déterminée. La transmission de couple peut être obtenue en clavetant les disques 16 à l'aide de cannelures 27 réalisées par brochage. Le maintien axial des disques est assuré par des écrous 28 munis d'un crantage extérieur de prise. Les écrous sont vissés sur les parties terminales d'un renflement de l'arbre creux 25/1 jusqu'à ce qu'ils viennent en appui contre un épaulement, de sorte que la position axiale de l'empilement de disques est fixée par rapport à l'arbre avec une grande précision.

Il faut remarquer au passage que l'arbre central 24 peut être positionné dans l'arbre creux 25/1 avec une grande précision, étant donné que les zones d'appui sont écartées d'une distance largement supérieure à deux fois le diamètre.

L'arbre constitué par l'assemblage des trois tronçons est supporté dans le stator par des roulements. Dans le cas illustré en Figure 5A, ces roulements comportent non seulement deux paliers à billes d'extrémité dont un seul, 29, est visible sur la Figure 5A, mais aussi des paliers à billes intermédiaires de soutien 30 interposés chacun entre deux modules adjacents. L'ensemble statorique de chaque module est centré axialement, indépendamment des autres, sur l'arbre correspondant par deux roulements de butée 31, généralement constitués par des roulements à aiguilles et des cales d'ajustage 32. Par diminution de l'épaisseur de l'un des cales 32/1 et augmentation de l'épaisseur de la cale 32/1 antagoniste, on peut modifier la position axiale des disques 17/1 du stator par rapport aux disques 16/1 du rotor. On voit en effet que la distance entre chacun des épaulements tels que 33/1 prévus sur l'arbre et une face en regard 34/1 du stator est fixée par l'épaisseur totale représentée par l'un des paliers de butée 31/1 et la cale d'ajustage 32/1 associée.

Pour permettre les dilatations différentielles de l'arbre et des ensembles statoriques, les paliers d'appui intermédiaire 30 seront prévus pour tolérer un léger débattement relatif des stators de deux modules adjacents l'un par rapport à l'autre.

Pour monter l'ensemble qui vient d'être décrit, on commence par constituer l'arbre par assemblage des différents tronçons. Puis on met en place les stators en laissant entre eux un jeu (Figure 5A) ou en prévoyant entre eux une liaison souple. Par un choix approprié des cales de réglage 32/1, on assure le centrage des disques rotoriques par rapport aux disques statoriques.

Le mode de réalisation de la Figure 5B ne se différencie de celui de la Figure 5A que par l'utilisation de paliers de butée doubles et les organes représentés portent les mêmes numéros de référence que sur la Figure 4B.

Les modes de réalisation montrés schématiquement en Figures 8A et 8B permettent de mettre en commun une fraction du circuit de retour de flux magnétique des modules adjacents. Ces modes de réalisation peuvent donc être plus compacts que le précédent.

On ne lie alors plus axialement les rotors des modules de manière rigide, d'où la présence de jeux 36, la transmission du couple se faisant par des cannelures. Le réglage du positionnement des modules est effectué à l'aide de cales 34/1, 34/2 et 34/3.

Là encore, les paliers de butée peuvent être conçus selon les deux variantes des Figures 4A et 4B.

Dans les deux cas, les disques statoriques 17/2 et les enroulements 14/2 du module central sont encadrés par des pièces 22 et 23 portant les circuits magnétiques de retour. La partie périphérique de ces pièces doit présenter une élasticité suffisante pour pouvoir absorber les dilatations différentielles.

Dans le cas montré en Figure 8A, les jeux entre les disques statoriques 17/2 et les disques rotoriques 16/2 sont ajustés à l'aide de cales 34/2 interposées entre les pièces 22 et 23 d'une part, une butée à bille 31/2 portant sur l'arbre, d'autre part.

Le montage des modules latéraux s'effectue de la même façon sur les tronçons d'arbre 25/1 et 25/3, fixés sur l'arbre central 24 par des moyens laissant subsister un jeu 36 (généralement de l'ordre du millimètre) autorisant les dilatations différentielles lors de la montée en température.

L'ensemble des stators est finalement serré entre deux flasques terminaux 37, par exemple par des tiges d'assemblage 38 réparties autour de l'axe. Grâce à cette disposition, les jeux entre disques sont réglés de façon indépendante sur les trois modules et la présence d'organes élastiques ou de jeux 36 autorise les dilatations.

Dans le cas de la Figure 8B, un seul palier de butée, éventuellement séparé du flasque statorique par des cales non représentées, assure le centrage de chaque stator, par l'intermédiaire de cales non représentées.

**Revendications**

1. Machine tournante dynamo-électrique à réluctance variable comprenant un rotor à plusieurs disques (16) sans bobinage et un stator comportant plusieurs disques (17) alternés avec ceux du rotor et portés par une carcasse magnétique de fermeture d'un circuit magnétique, des moyens (14) portés par le stator créant un champ alternatif dirigé axialement à travers les disques qui comportent des plots magnétiques, régulièrement répartis angulairement autour de l'axe, lesdits moyens de création du champ alternatif comprenant au moins trois bobinages (14/1, 14/2, 14/3) alimentés par les différentes phases d'une alimentation polyphasée, les disques étant répartis en au moins trois groupes de chacun plusieurs disques successifs et étant associés avec lesdits moyens et le circuit magnétique de façon que chaque groupe soit traversé par le champ créé par une phase différente, caractérisée en ce que chaque groupe de plusieurs disques rotoriques (16) est individuellement centré axialement par rapport au groupe de disques statoriques correspondant par des paliers de butée (31) et des cales de réglage (32) et en ce que le rapport entre le diamètre interne des disques rotoriques (16) et leur diamètre externe est supérieur à 0,5.

2. Machine selon la revendication 1, caractérisée en ce que l'arbre rotatif est en tronçons associés chacun à un groupe, les tronçons (25/1, 25/3) des groupes latéraux au moins étant creux.

3. Machine selon la revendication 2, caractérisée en ce qu'elle comprend un tronçon interne (24) portant un groupe de disques rotoriques et sur lequel sont placés les tronçons creux portant les autres groupes.

4. Machine selon la revendication 1, 2 ou 3, caractérisée en ce que le stator comporte un circuit magnétique séparé associé à chaque rotor, les trois circuits étant reliés par des moyens leur permettant de se déplacer axialement.

5. Machine selon la revendication 1, 2 ou 3, caractérisée en ce que le stator comporte un circuit magnétique ayant des parties communes aux différents bobinages.

6. Machine selon l'une quelconque des revendications 1 à 5, caractérisée en ce que chaque rotor est centré axialement par rapport au groupe de disques statoriques correspondant par un palier de butée double enserrant un flasque du stator.

7. Machine selon l'une quelconque des revendications 1 à 5, caractérisée en ce que chaque groupe de disques statoriques est maintenu par rapport au groupe de disques rotoriques correspondant par deux paliers de butée placés chacun à une extrémité du groupe.

**Claims**

1. Variable reluctance rotary dynamo electric machine comprising a rotor devoid of coil and having a plurality of disks (16) and a stator having a plurality of disks (17) alternating with the disks of the rotor and carried by a magnetic frame closing a magnetic circuit; means (14) carried by the stator and generating an alternating field axially directed across the disks which have magnetic segments distributed regularly angularly about the axis, said means for generating an alternating field comprising at least three coils ($14_1$, $14_2$, $14_3$) fed by the different phases of a polyphase supply, the disks being distributed into at least three groups each of a plurality of successive disks and being associated with said means and with the magnetic circuit whereby each group is traversed by the field generated by a different phase, characterized in that each group of a plurality of rotor disks (16) is individually axially centered with respect to the respective group of stator disks by thrust bearings (31) and adjustment spacers (32), and in that the ratio between the inner diameter of the rotor disks (16) and the outer diameter thereof is higher than 0.5.

2. Machine according to claim 1, characterized in that the rotating shaft is in a plurality of portions each associated with a group, the portions (25/1, 25/3) of the lateral groups at least being hollow.

3. Machine according to claim 2, characterized in that it comprises an internal portion (24) carrying a group of rotor disks and on which the hollow portions carrying the other groups are placed.

4. Machine according to claim 1, 2 or 3, characterized in that the stator comprises a separate magnetic circuit associated with each rotor, all three circuits being connected by means for mutual axial movement.

5. Machine according to claim 1, 2 or 3, characterized in that the stator comprises a magnetic circuit having parts which are common to the different coils.

6. Machine according to any one of claims 1–5, characterized in that each rotor is axially centered with respect to the respective group of stator disks by a double thrust bearing straddling a radial plate of the stator.

7. Machine according to any one of claims 1–5, characterized in that each group of stator disks is maintained with respect to the respective group of rotor disks by two thrust bearings each located at one end of the group.

## Patentansprüche

1. Dynamoelektrische Drehmaschine mit variabler Reluktanz mit einem Rotor mit mehreren Scheiben (16) ohne Wicklung und mit einem Stator mit mehreren Scheiben (17), welche abwechselnd mit denen des Rotors angeordnet und durch ein Magnetgestell zum Schliessen eines magnetischen Kreislaufes getragen sind, mit vom Stator getragenen Mitteln (14), welche ein axial quer durch die Scheiben gerichtetes Wechselfeld erzeugen, wobei die Scheiben magnetische Kontakte tragen, die gleichmässig winkelförmig um die Achse verteilt sind, wobei die Mittel zur Erzeugung des Wechselfeldes wenigstens drei Wicklungen (14/1, 14/2, 14/3) aufweisen, welche durch unterschiedliche Phasen einer mehrphasigen Speisung gespeist werden, wobei die Scheiben wenigstens auf drei Gruppen jeder der nachfolgenden mehreren Scheiben verteilt und mit den Mitteln und dem magnetischen Kreislauf derart verbunden sind, dass jede Gruppe von dem erzeugten Feld mit einer unterschiedlichen Phase durchdrungen ist, dadurch gekennzeichnet, dass jede Gruppe mehrerer Rotorscheiben (16) einzeln im Verhältnis zur korrespondierenden Gruppe von Statorscheiben axial durch Drucklager (31) und Ausrichtkeile (32) zentriert ist, und dass das Verhältnis zwischen dem inneren Durchmesser der Rotorscheiben (16) und ihrem äusseren Durchmesser oberhalb 0,5 liegt.

2. Maschine nach Anspruch 1, dadurch gekennzeichnet, dass die Rotationswelle von Abschnitten gebildet ist, welche jeweils mit einer Gruppe verbunden sind, wobei wenigstens die Wellenabschnitte (25/1, 25/3) der seitlichen Gruppen hohl sind.

3. Maschine nach Anspruch 2, dadurch gekennzeichnet, dass diese einen inneren Abschnitt (24) aufweist, welcher eine Gruppe von Rotorscheiben trägt und auf welchem die hohlen, die anderen Gruppen tragenden Abschnitte angeordnet sind.

4. Maschine nach Anspruch 1 oder einem der folgenden, dadurch gekennzeichnet, dass der Stator einen mit jedem Rotor getrennt verbundenen magnetischen Kreislauf aufweist, wobei die drei Kreisläufe durch Mittel miteinander verbunden sind, welche eine axiale Verschiebung erlauben.

5. Maschine nach Anspruch 1, 2 oder 3, dadurch gekennzeichnet, dass der Stator einen magnetischen Kreislauf aufweist, welcher gemeinsame Teile mit unterschiedlichen Wicklungen hat.

6. Maschine nach Anspruch 1 oder einem der folgenden, dadurch gekennzeichnet, dass jeder Rotor im Verhältnis zur korrespondierenden Gruppe von Statorscheiben durch ein doppeltes Drucklager axial zentriert ist, welches einen Flansch des Stators umschliesst.

7. Maschine nach einem der Ansprüche 1 bis 5, dadurch gekennzeichnet, dass jede Gruppe von Statorscheiben im Vergleich zur korrespondierenden Gruppe von Rotorscheiben durch zwei Drucklager gehalten ist, welche jeweils an einem Ende der Gruppe angeordnet sind.

0 128 099

FIG.1

FIG.6.

FIG.7.

FIG.2.

FIG.3.

7

FIG.4A.

FIG.4B.

FIG. 5A.

0 128 099

# FIG.5B.

SERRAGE

SERRAGE

0 128 099

FIG.8A.

# FIG.8B.